# EUROPEAN PATENT APPLICATION

(11) **EP 2 371 624 A1**
(43) Date of publication of application: **05.10.2011**
(21) Application number: 10425212.7
(22) Date of filing: 23.06.2010
(51) Int. Cl.: B60Q 1/44

(54) **Braking level indication device for motor vehicles**

(30) Priority: 26.03.2010 IT RM20100140
(71) Applicant: Rossi, Giovanni, 00199 Roma (IT)
(72) Inventor: Rossi, Giovanni, 00199 Roma (IT)

(57) **Abstract**

The "braking level indication device for motor vehicles" consists of the following parts:
a proportional pressure sensor, that is applied to vehicle braking system, an electronic control unit, a LED stripe located in the back of vehicle.

Device operation description: applied pressure by driver on braking pedal is detected by pressure sensor and transmitted to control unit that lights LED stripe progressively and proportionally to braking level, until all elements are lit, in case of maximum intensity braking action.

This device has the scope of avoiding or, at least, drastically reducing accidents between vehicles because, in respect of stop lights lighting that don't give the sensation of braking intensity to following drivers, and in respect of intermittent lights (installed in certain vehicles) that light automatically when the vehicle itself is almost stopped, this device lights a LED stripe in rapid sequence, for an amount of elements lit proportional to the braking intensity and when braking action just occurs; this fact allows following driver to make an actual valuation of the braking intensity carried out by the preceding vehicle.

Besides, LED stripe quick and progressive lighting movement gives a more noticeable signal to following drivers, in respect of total instantaneous lighting of a generic length LED stripe.

## Description

Continuous increasing of circulating motor vehicles number causes a corresponding raising of accidents. Among them, accidents occur due to actual difficulty to prevent or avoid sudden movements by other vehicles, and other ones are caused by imprudence or no respect of street rules.

Let us consider the enormous number of accidents between a vehicle and its foregoing one. These could be avoided by maintaining a certain distance from the foregoing vehicle itself, that is sometimes possible to do (yet not done) but that is very often not accomplished because of high density of circulating vehicles.

It's no doubt taking more care could diminish accidents, but we have to consider driver attention diminishing during driving.

Another problem for drivers is valuating braking intensity of the foregoing vehicle; stops lighting only indicates vehicle braking, but they don't distinguish between smooth deceleration and abrupt braking; when the following driver succeeds in valuating braking level, he often has no time to react properly.

Recently, car designers tried to fix up this problem by mean of lighting vehicle intermittent lights, but manual activation requires a significant amount of time and then it often doesn't resolve the problem itself; automatic lighting (installed in some recent car models) acts only after a very hard braking action and when the braking car is often already stopped, wasting precious critical time that would have been useful for pre-warning of the following driver.
The proposed device, installable on every kind of vehicle, with low cost, is designed to inform the driver in the following vehicle about foregoing vehicle braking intensity, simultaneously to the occurrence of braking action.

The braking level indication device for motor vehicles is essentially composed of:
- brake pedal pressure sensor
- electronic control unit for signal analysis
- LED stripe located in the back of vehicle and divided in two consecutive zones.

Operation is as follows:
depending on pressure applied on brake pedal (therefore, depending on braking intensity), the pressure sensor sends a proportional signal to the control unit, that analyzes it and turns on one or two zones of the LED stripe.

Precisely, first zone LEDs only light if a smooth braking action occurs (this first zone corresponding to LED stripe currently applied to existing vehicles as 3rd stop light), the second zone LEDs light quickly and progressively, the amount of elements lit being proportional to braking level, until all elements are lit, this condition only occurring in very heavy or emergency braking action.

This way, driver of the following vehicle knows braking action level (caused by preceding driver) in the same moment it occurs, and so he can succeed in braking correctly and very soon.

In particular:
- the proportional pressure sensor on brake pedal may be applied to brake pedal itself, or to the brake booster, or to the pneumatic brakes circuit, depending on the particular vehicle.
- the control unit (not particularly complex, anyway) acts proportionally to input signal level, lighting the first zone of LED stripe totally in case of smooth braking and the second zone progressively, the amount of elements lit being proportional to braking level, having all elements lit only when very heavy or emergency braking occurs.
- LED stripe is electrically divided in two zones:
   the first, that is composed of about 10 LEDs, lights corresponding just to braking action (no matters its intensity), exactly as the stop light stripe commonly installed in modem vehicles today;
   the second, that is composed of about 60 LEDs, lights quickly and progressively, depending on braking level, as bar level indicators commonly used in electronic devices.

In this manner, the following driver will see first zone lighting only, corresponding to foregoing vehicle smooth braking action (as today already occurs with conventional stop lights); besides, he will see a lighted progressive stripe, indicating braking intensity, in case of hard braking action.

It's clear that LED stripe progressive lighting gives a more noticeable signal also in case of bad weather conditions (as rain or fog), in respect of total instantaneous lighting of a generic length LED stripe: in fact, following drivers also notice lights moving effect of LED stripe second zone, instead of simply viewing static lights.

Another important characteristic of the braking level indication device for motor vehicles is the possibility to be installed in not predisposed vehicles, with no need to make modifications to vehicle systems. For example, to install the device in a car, it will be sufficient to install pressure sensor on brake pedal (or in brake booster), making electrical connections between sensor and control unit that may be situated in the engine (or luggage) van, and making electrical connections between control unit (powered by car electrical plant) and LED stripe, that may be glued to the back glass on the inside.

Conventional 3rd stop LED stripe (already present on the car), may be electrically disconnected because its function will be replicated by the LED stripe first zone of this invention.

## Claims

1. braking level indication device for motor vehicles, **characterized by** showing braking level applied to a motor vehicle by means of a LED stripe located in back of vehicle, that is physically continuous but functionally divided in two contiguous substripes, the first one lighting itself totally in case of smooth braking, and the second lighting progressively, starting from a specific threshold and going on, proportionally to braking level, until all elements are lit, this condition occurring in very heavy braking action.

2. braking level indication device for motor vehicles, **characterized by** using a proportional pressure sensor, properly installed in any point of brake system , to generate control signal for LED stripe control unit.

3. braking level indication device for motor vehicles, **characterized by** giving a better warning by means of progressive LED stripe lighting in respect of LED instantaneous full lighting, because it creates lights moving effect too.

4. braking level indication device for motor vehicles, **characterized by** allowing its installation in all brands of motor vehicles, even if not prepared for, because it requires no modification of homologated brake systems.
